## Europäisches Patentamt

## European Patent Office

## Office européen des brevets

(11) Publication number: **0 075 458**
A2

# (12) EUROPEAN PATENT APPLICATION

(21) Application number: **82304909.3**

(22) Date of filing: **17.09.82**

(51) Int. Cl.³: **B 23 Q 3/155**, B 23 Q 1/00

(30) Priority: **19.09.81 GB 8128408**

(43) Date of publication of application: **30.03.83**
**Bulletin 83/13**

(84) Designated Contracting States: **CH DE FR GB IT LI SE**

(71) Applicant: **PRUTEC LIMITED, 142 Holborn Bars, London (GB)**

(72) Inventor: **Macmichael, Donald Bruce Atherton, 17, Green Street, Royston Herts (GB)**

(74) Representative: **Messulam, Alec Moses, A. Messulam & Co. 24 Broadway, Leigh on Sea Essex SS9 1BN (GB)**

(54) **Tool mounting arrangements.**

(57) The invention relates to a tool mounting arrangement comprising a movable arm carrying a tool holder and a tool rack for holding one or more tools selectively and releasably engageable by the tool holder.

In order to avoid the need to incorporate a selenoid or an actuating piston in the robot arm, an actuating means (30) is associated with the tool rack and is operable to cause interconnection and disengagement between the tool holder (16) and a tool (10) in the rack.

EP 0 075 458 A2

## TOOL MOUNTING ARRANGEMENTS

This invention relates to tool mounting arrangements for securing interchangeable tools to a tool holder, for example of a robot arm, machine tool or other piece of automatic machinery.

In some applications a robot or like automated machine may be required to use more than one tool during one preprogrammed task. To this end it is known to provide multi-headed tools on a robot arm or the like. However, such a multi-headed tool is heavy and bulky and requires additional power supplies and instrumentation.

In an alternative solution interchangeable tools are provided which can be locked to a robot arm or the like as required by a clamping arrangement which secures the tool in such a way that it is rigidly mounted but can be released automatically. Known arrangements of this kind have involved one or more actuators, eg solenoids or pneumatic pistons, mounted on the robot or like arm for securing the tool to the arm. However, the provision of an actuator on an arm increases the bulk and weight of the arm and also requires a power supply which must be ducted through the arm, further increasing the weight and taking up additional space.

It is an object of the invention to provide alternative means for securing interchangeable tools to a tool holder, for example on the arm of an industrial robot or similar automated member.

According to one aspect of the present invention, there is provided a tool rack for holding one or more tools selectively and releasably engageable by a tool holder, which tool rack comprises actuating means operable to cause interconnection and disengagement between a tool holder and a tool in the rack.

0075458

In use, the tool holder is located in the proximity of (eg over) a selected tool in the rack, and the actuating means is operated to cause interconnection between the tool and the holder. The tool is removed by relocating the tool in the rack and operating the actuating means to cause disengagement.

It will be clear that the invention finds particular application in the field of robotics, machine tools etc., in which a tool holder is located at the end of a robot arm or the like automated member.

It is to be noted that use of a tool rack in accordance with the invention means that an actuating means is not required on a robot or like arm, so that the cost, weight and bulk of the arm may be reduced as compared with the prior art arrangements.

Further, it is to be noted that a tool cannot be removed from a tool holder except when appropriately located in the tool rack, so that there is no risk of a tool being accidentally disengaged during use.

In a preferred embodiment, the tool rack is adapted to hold several tools, conveniently different tools. Individual actuators may be associated with each tool, but preferably a common actuator is provided operable to cause interconnection and disengagement between the tool holder and any of the tools.

The tool(s) and holder may have a variety of different configurations by means of which they may be releasably interconnected.

In the preferred embodiment, a tool is provided with spigots which locate in tapered holes in the tool holder. The tool and tool holder are interconnected and disengaged by relative rotation of a clamping plate on the tool holder in an appropriate direction under the action of the actuating means.

Conveniently, this is achieved by the clamping plate being provided with a protruding peg engageable by a bar to cause appropriate rotation. With multi-tool embodiments of such construction, a single actuator for all of the tools may comprise a longitudinally displaceable rod with a series of protruding bars, one adjacent each tool, such that displacement of the rod causes appropriate movement of all of the bars and hence appropriate rotation of the clamping plate to cause interconnection or disengagement between the tool holder and any selected tool.

In an alternative embodiment, the tool holder and tool are provided with holes which are aligned when appropriately located with respect to one another, and register pins are provided for passing through the aligned holes.

As a further possibility locking fingers with an "over-centre" gripping action may be provided for locking the tool to the tool holder.

The arrangement is preferably such that positive dislodging of the tool is effected upon disengagement from a tool holder. Conveniently, a disengagement spring is incorporated between the tool holder and the tool, preferably by being mounted on the tool holder, such that the spring is compressed on interconnection. The compression energy serves to cause the components to spring apart upon disengagement. For example, in the preferred embodiment described above a spring is provided on the tool holder and the clamping plate is ramped in an appropriate manner to cause compression of the spring on connection of a tool to the holder.

In a further aspect, the present invention provides a tool mounting arrangement comprising a movable machine arm having a tool holder, a tool rack for holding one or more tools selectively and releasably engageable by the tool holder, and actuating means associated with the tool rack and operable to cause interconnection and disengagement between the tool holder and a tool in the rack.

The invention will be further described, by way of example, with reference to the accompanying drawings, in which:

Figure 1 is a schematic sectional view illustrating part of a tool and tool holder;

Figure 2 is a plan view of the arrangement shown in Figure 1 together with a partial end view; and

Figure 3 is a schematic sectional view of alternative constructions of a tool and tool holder.

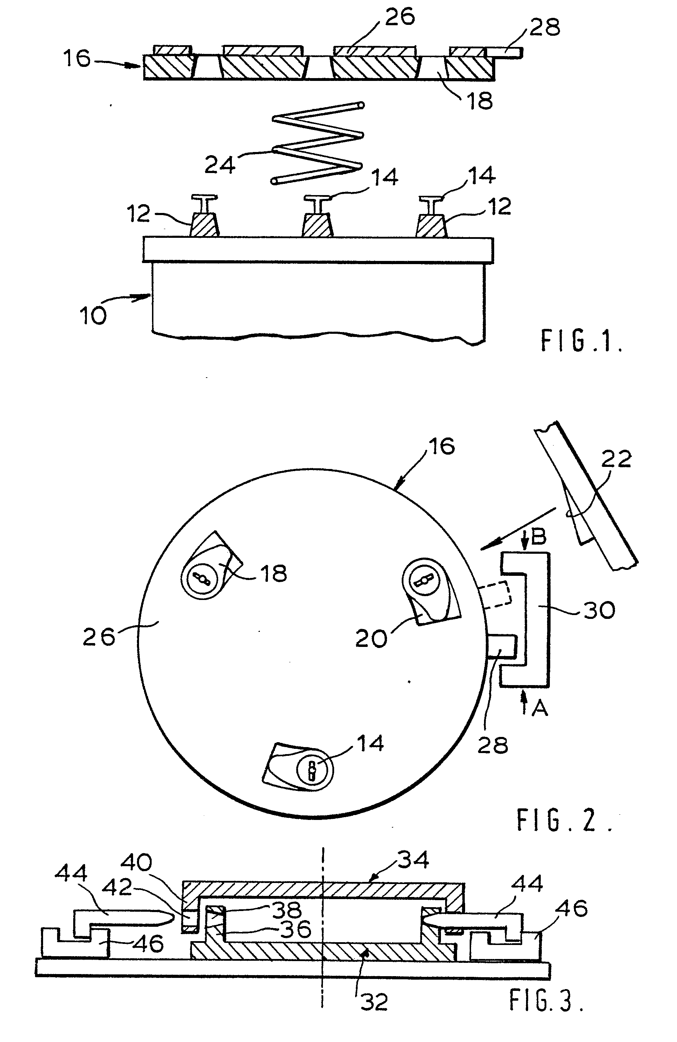

In the arrangement illustrated in Figures 1 and 2, a tool rack (not shown) includes a plurality of spaces for receiving a series of tools such as the tool 10 of which the upper part is shown in Figure 1. The lower part of the various tools may differ and be adapted for performing different function. However, the upper parts are all as illustrated and include three upwardly extending locating spigots 12 terminating in respective flanges 14.

Also illustrated is a tool holder 16 at the end of a robot arm or the like automated member (not shown). The tool holder 16 includes three tapered holes 18 for receiving the locating spigots 12 of a tool 10, in the manner illustrated in Figure 2. The tool holder 16 includes a clamping plate 26 having an outwardly extending peg 28 for engagement by an actuator 30 mounted on the tool rack adjacent the tool 10. The clamping plate 26 has regions 20 surrounding the holes 18 in the tool holder 16 which are formed with a keyhole like aperture and are ramped, sloping upwardly towards the narrow end of the apertures. This is illustrated at 22 in the end view looking in the direction of the arrow in Figure 2. Movement of the actuator 30 causes rotation of the clamping plate 26 about its central axis, via peg 28, for causing interconnection or disengagement between the tool 10 and the tool holder 16 as appropriate. A disengagement spring 24 is provided at the base of the tool holder 16.

In use, the tool holder 16 is connected to a selected tool 10 in the rack by locating the tool holder 16 over the tool 10 so that the spigots 12 pass through the holes 18 in the tool holder. The actuator 30 is operated to rotate the clamping plate in the direction of arrow A in Figure 2. During such movement, the actuator engages peg 28, moving it from the position shown in full lines to the position shown in dotted lines. This causes relative movement of the spigots 12 and the regions 20 such that the spigots move from the wide end to the narrow end of the apertures in the clamping plate 26 to secure the tool holder and tool together. During this movement, the flanges 14 also pass up the ramped regions 22, drawing the tool holder 16 and tool 10 towards one another, thus compressing the spring 24. When the tool 10 has been secured to the tool holder 16 in this way the arm with the tool 10 attached may be removed and used as desired.

When subsequently the tool 10 is to be removed, for example to enable a different tool to be attached, the arm is moved to reposition the tool 10 in the tool rack. The actuator 30 is then operated to cause movement of the clamping plate 26 in the reverse direction, ie in the direction of arrow B in Figure 2. This results in relative movement of the spigots and the regions 20 from the narrow end to the wide end of the apertures, in which position the flanges are freed and the tool 10 is thus released from the holder 16. The release of the compression on the spring 24 during such movement ensures positive disengagement of the tool 10 from the tool holder 16.

When the rack is designed to hold a plurality of tools, the actuating means may be constituted by a single actuator common to all the tools. Such an actuator may comprise an elongate longitudinally displaceable rod with a series of protruding bars arranged one adjacent each tool. With such an actuator, one or other of the bars serves to rotate the clamping plate 26 regardless of which tool 10 is aligned with the tool holder 16.

Figure 3 illustrates schematically an alternative configuration of tool 32 and tool holder 34. The tool 32 includes two (or more) upstanding regions 36 each with an associated aperture 38. The tool holder 34 includes two (or more) downwardly extending flanges 40 provided with respective holes 42, each for alignment with an associated hole 38. A pair of locking keys 44 are provided for passing through the registered holes for locking the tool to the tool holder. The locking keys 44 are movable between a release position, as illustrated at the left of Figure 3, and a locking position, as illustrated at the right of Figure 3, under the control of respective actuators 46 mounted on the frame of the tool rack.

CLAIMS

1.    A tool rack for holding one or more tools selectively and releasably engagable by a tool holder, characterised in that the tool rack comprises an actuating means (30) operable to cause interconnection and disengagement between the tool holder (16) and a tool (10) in the rack.

2.    A tool rack as claimed in Claim 1, characterised in that the rack is operative to hold several tools (10) and the actuating means comprises a common actuator (30) operable to cause interconnection and disengagement between the tool holder (16) and any of the tools (10) in the rack.

3.    A tool mounting arrangement comprising a movable arm carrying a tool holder and a tool rack for holding one or more tools selectively and releasably engageable by the tool holder, characterised in that an actuating means (30) is associated with the tool rack and is operable to cause interconnection and disengagement between the tool holder (16) and a tool (10) in the rack.

4.    A mounting arrangement as claimed in Claim 3, characterised in that each tool (10) is provided with spigots (12) which locate in tapered holes (18) in the tool holder (16), the tool (10) and the tool holder (16) being interconnected and disengaged by rotation under the action of the actuating means (30) of a clamping plate (26) relative to the tool holder (16).

5.    A tool mounting arrangement as claimed in Claim 4, characterised in that the clamping plate (26) is provided with a protruding peg (28) engageable by a bar (30) to cause appropriate rotation, the bar (30) constituting the actuating means.

6. A tool mounting arrangement as claimed in Claim 4 or 5, characterised in that the rack is operative to hold a plurality of tools (10) and a single actuator is provided for all the tools (10), the actuator comprising a longitudinally displaceable rod with a series of protruding bars arranged one adjacent each tool such that displacement of the rod causes movement of all the bars and rotation of the clamping plate (26) to cause interconnection or disengagement between the tool holder (16) and any selected tool (10).

7. A tool mounting arrangement as claimed in Claim 3, characterised in that the tool holder and the tool are provided with holes (42, 38) which are aligned when appropriately located with respect to one another and register pins (44) are provided for passing through the holes (42, 38) to lock the tool to the tool holder.

8. A tool mounting arrangement as claimed in Claim 3, characterised in that the coupling between the tool holder (16) and each tool (10) is achieved by means of locking fingers having an over-centre gripping action.

9. A tool mounting arrangement as claimed in any of Claims 3 to 8, characterised in that a disengagement spring (24) is incorporated between the tool (10) and the tool holder (16) to effect positive dislodging of the tool (10) upon disengagement of the tool holder (16).

10. A tool mounting arrangement as claimed in Claim 9 when appended to claim 4, characterised in that the spring (24) is mounted on the tool holder (16) and the clamping plate (26) includes regions (20) for engagement with spigots (12) on the tool (10) which regions are ramped in such a manner as to cause compression of the spring (24) upon connection of the tool (10) with the tool holder.

0075458

1:1

FIG.1.

FIG.2.

FIG.3.